# EUROPÄISCHE PATENTSCHRIFT

(11) **EP 3 102 990 B1**
(45) Veröffentlichungstag und Bekanntmachung des Hinweises auf die Patenterteilung: **21.08.2019**
(21) Anmeldenummer: 15701760.9
(22) Anmeldetag: 26.01.2015
(51) Int. Cl.: G05B 23/02

(54) **VERFAHREN ZUR ERMITTLUNG VON GRÖSSEN EINER ZYKLISCH ARBEITENDEN MASCHINE**
METHOD FOR DETERMINING THE VALUE OF A QUANTITY CHARACTERISING A CYCLICALLY WORKING MACHINE
PROCÉDÉ DE DÉTERMINATION DE VALEURS D'UNE GRANDEUR CARACTÉRISANT LE FONCTIONNEMENT D'UNE MACHINE

(30) Priorität: 04.02.2014 AT 500802014
(43) Veröffentlichungstag der Anmeldung: 14.12.2016
(73) Patentinhaber: B&R Industrial Automation GmbH, 5142 Eggelsberg (AT)
(72) Erfinder: EDER, Franz, 5144 Handenberg (AT)
(74) Vertreter: Patentanwälte Pinter & Weiss OG
(86) Internationale Anmeldenummer: PCT/EP2015/051451
(87) Internationale Veröffentlichungsnummer: WO 2015/117848

(56) Entgegenhaltungen:
- DE-A1- 4 041 043
- RENE DE JESUS R-T ET AL: "FPGA based on-line tool breakage detection system for CNC milling machines", MECHATRONICS, PERGAMON PRESS, OXFORD, GB, Bd. 14, Nr. 4, Mai 2004 (2004-05), Seiten 439-454, XP004486010, ISSN: 0957-4158, DOI: 10.1016/S0957-4158(03)00069-2
- SEBASTIAN FALTINSKI ET AL: "Detecting anomalous energy consumptions in distributed manufacturing systems", INDUSTRIAL INFORMATICS (INDIN), 2012 10TH IEEE INTERNATIONAL CONFERENCE ON, IEEE, 25. Juli 2012 (2012-07-25), Seiten 358-363, XP032235267, DOI: 10.1109/INDIN.2012.6301142 ISBN: 978-1-4673-0312-5

## Beschreibung

Die gegenständliche Erfindung betrifft ein Verfahren zur Ermittlung von Größen einer Betriebs- oder Maschinendatenerfassung eines zyklisch arbeitenden Verbrauchers eines Produktionsprozesses, welcher in einem Arbeitszyklus zyklisch wiederholt wird, wobei zumindest ein den Energieverbrauch charakterisierendes Messsignal des Verbrauchers erfasst und daraus der Energieverbrauch des Verbrauchers bestimmt wird.

In Produktionsanlagen kommen zur Herstellung von verschiedenen Produkten eine Vielzahl von Maschinen bzw. elektrischen Verbrauchern zur Anwendung. Dabei werden oftmals viele Maschinen parallel zur Herstellung von gleichen Teilen betrieben. Der Maschinenpark ist dabei aber in der Regel nicht homogen, sondern es werden unterschiedliche Maschinenfabrikate bzw. Maschinentypen verwenden. Als Beispiel dafür sei die Fertigung von Spritzgießteilen genannt, wo Spritzgießteile auf vielen Spritzgießmaschinen gleichzeitig gefertigt werden.

Für die gegenständliche Erfindung ist es aber nicht entscheidend, ob verschiedene oder gleiche Produktionsmaschinen verschiedene oder gleiche Teile herstellen, es ist auch nicht entscheidend ob ein hierzu verwendeter Maschinenpark homogen ist oder nicht. Das Verfahren lässt sich in Produktionen mit lauter gleichen Maschinen ebenso anwenden, wie für beliebige Anzahl unterschiedlicher Werkstücke.

In modernen Produktionsanlagen werden im Rahmen der Betriebsdatenerfassung und Maschinendatenerfassung eine Reihe von verschiedenen Größen von Produktionsmaschinen oder Produktionsprozessen erfasst, aufgezeichnet, ausgewertet und angezeigt. Als Beispiele solcher Größen der Produktionsmaschine oder des Produktionsprozesses der Betriebs- und Maschinendatenerfassung seien hier Produktionsstück, Produktionsgeschwindigkeit, Störungen, Stillstandszeiten, Wartungspausen, Maschinenzustände, etc., genannt. Dazu werden an der Produktionsmaschine verschiedene Sensoren verbaut, die verschiedene Messgrößen an der Produktionsmaschine erfassen und an eine Auswerteeinheit liefern, oder es werden benötigte Messgrößen durch Kommunikation mit der Maschinensteuerung abgefragt. Aus den Messgrößen der Sensoren oder aus der Maschinensteuerung werden dann die benötigten Größen für die Betriebsdatenerfassung und Maschinendatenerfassung ermittelt. Der Nachteil dabei ist allerdings, dass verschiedenste Sensoren benötigt werden, die verbaut und verkabelt werden müssen oder dass eine aufwendige Kommunikation mit der Maschinensteuerung erforderlich ist, was den Aufwand für die Betriebsdatenerfassung und Maschinendatenerfassung erhöht oder den Produktionsablauf beeinflusst.

Zusätzlich werden in Produktionsanlagen oftmals auch Energiemanagementsysteme eingesetzt, um den Energieverbrauch von Produktionsmaschinen oder elektrischen Verbrauchern zu erfassen und auszuwerten, z.B. um über eine Parameteränderung der Produktionsmaschine oder des Verbrauchers den Energieverbrauch zu optimieren. Aber auch hierzu bedarf es einer aufwendigen Kommunikation mit der Maschinensteuerung, um direkt Einfluss auf die Produktionsmaschine nehmen zu können. Ein Beispiel für eine Energieoptimierung an einer Maschine mit einem zyklisch ablaufenden Prozess, wie z.B. einer Spritzgießmaschine, ist in der EP 1 346 812 B1 beschrieben. Darin wird der Zyklus in mehrere Teilzyklen unterteilt und versucht, den Energieverbrauch einzelner Teilzyklen durch Variation der Maschinenparameter zu optimieren. Zur Erfassung des Energieverbrauchs kommen verschiedene Sensoren, wie z.B. ein Strom- oder Spannungssensor, zum Einsatz. Größen der Produktionsmaschine oder des Produktionsprozesses, neben dem Energieverbrauch oder darauf bezogener Größen, werden hier aber nicht systematisch erfasst.

Die DE 40 41 043 A1 offenbart eine mathematische Analyse einer Größe eines Messignals und daraus folgend die Berechnung einer weiteren Größe. "FPGA based on-line tool breakage detection system for CNC milling machines", Rene De Jesus R-T et al., Mechatronics, Pergamon Press, Oxford, GB, Bd. 14, Nr. 4 Mai 2004, Seiten 439-454, zeigt einen Vergleich von Messwerten innerhalb von Arbeitszyklen, womit auf Defekte geschlossen wird. Beiden Druckschriften ist gemein, dass kein zyklisch arbeitenden Verbraucher eines Produktionsprozesses, welcher in einem Arbeitszyklus zyklisch wiederholt wird, behandelt wird.

Es ist nun eine Aufgabe der gegenständlichen Erfindung, auf einfache Weise Betriebsdaten oder Maschinendaten einer zyklisch arbeitenden Produktionsmaschine zu erfassen und zur Verfügung zu stellen.

Diese Aufgabe wird erfindungsgemäß dadurch gelöst, indem das zumindest eine Messsignal gleichzeitig mathematisch analysiert wird, um einen Arbeitszyklus des Verbrauchers zu ermitteln und um mit der ermittelten Zyklusdauer des Arbeitszyklus zumindest eine Größe der Betriebs- oder Maschinendatenerfassung zu ermitteln. Das den Energieverbrauch charakterisierende Messsignal wird gleichzeitig mit bekannten mathematischen Methoden ausgewertet, um den Arbeitszyklus des Produktionsprozesses zu ermitteln. Der Arbeitszyklus bzw. die Zyklusdauer des Arbeitszyklus ist dann die Basis zur Ermittlung einer Fülle von Größen der Betriebs- und Maschinendatenerfassung, wie z.B. Produktionsstück, Produktionsgeschwindigkeit, Produktionsgüte, Produktionskonstanz, Störungen, Stillstandszeiten, Wartungspausen, Maschinenzustände, Störungen, zeitliche Veränderungen im Produktionsprozess, etc. Damit werden ohnehin erfasste Messgrößen gleichzeitig genutzt, um auf Größen der Betriebs- und Maschinendatenerfassung rückzuschließen. Die Erfassung weiterer Messgrößen oder eine aufwendige Maschinenkommunikation wird dadurch überflüssig.

Als mögliche mathematische Verfahren zur Bestimmung des Arbeitszyklus kommt eine Autokorrelationsanalyse des Messsignals, das Suchen einer wiederkehrenden dominierenden Frequenz im Frequenzspektrum des Messsignals oder die Suche eines charakteristischen, wiederkehrenden Signalmusters im Messsignal in Frage, wobei es noch eine Reihe anderer mathematischer Verfahren gibt.

Vorteilhaft wird aus dem ermittelten Arbeitszyklus der Takt des Verbrauchers ermittelt, woraus als Größe der Betriebs- und Maschinendatenerfassung die Produktionsstück und/oder die Produktionsgeschwindigkeit des Verbrauchers ermittelt werden kann.

Vorteilhaft wird der Signalverlauf des Messsignals über den Arbeitszyklus integriert, woraus als Größe der Betriebs- und Maschinendatenerfassung eine Pause, Störung oder Abschaltung des Verbrauchers ermittelt werden kann.

Vorteilhaft wird der Signalverlauf des Messsignals über den Arbeitszyklus integriert, woraus aus Vergleich der Integrale über aufeinanderfolgende Arbeitszyklen oder mit einem vorgegebenen Schwellwert eine Veränderungen im Produktionsprozess oder des Verbrauchers ermittelt werden kann.

Vorteilhaft wird der Signalverlauf des Messsignals über den Arbeitszyklus integriert und aus der Varianz des Integrals des Messsignals von aufeinanderfolgenden Arbeitszyklen als Größe der Betriebs- und Maschinendatenerfassung die Prozesskonstanz oder die Produktionsgüte ermittelt.

Vorteilhaft wird durch Vergleich oder Autokorrelation des Messsignals in einem Arbeitszyklus mit einem abgespeicherten Muster-Signalverlauf ein bestimmter Produktionsprozess ermittelt.

Weiters kann auch noch in vorteilhafter Weise der Energieverbrauch mehrerer Verbraucher bestimmt werden und daraus ein Gesamtenergieverbrauch über die Zeit ermittelt werden, und der Gesamtenergieverbrauch optimiert werden, um Energieverbrauchsspitzen zu glätten.

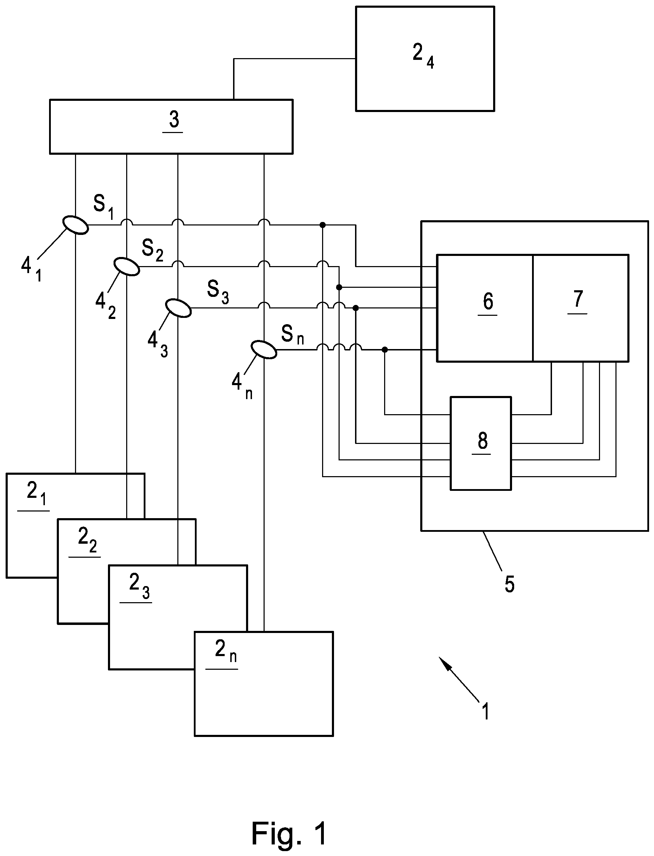

Die gegenständliche Erfindung wird nachfolgend unter Bezugnahme auf die Figur 1 näher erläutert, die beispielhaft, schematisch und nicht einschränkend eine vorteilhafte Ausgestaltung der Erfindung zeigt. Dabei zeigt
Fig.1 ein Anlagenschema zur erfindungsgemäßen Betriebs- und Maschinendatenerfassung.

Die in Fig.1 schematisch dargestellte Produktionsanlage 1 umfasst eine Anzahl von zyklisch arbeitenden Verbrauchern 2₁, 2₂, 2₃, ..., 2ₙ, die zu deren Betrieb von einer Energieverteilung 3 die benötigte Energie erhalten. Ein Verbraucher kann eine Produktionsmaschine sein, oder ein einzelner Antrieb einer Produktionsmaschine, z.B. ein Elektromotor, ein Hydraulik- oder Pneumatikzylinder. Unter zyklisch arbeitend wird verstanden, dass ein Arbeitsprozess in einem Arbeitszyklus zyklisch wiederholt wird. Zyklische Arbeitsprozesse kommen häufig bei Produktionsmaschinen vor. Als Beispiel eines zyklischen Arbeitsprozesses sei eine Spritzgießmaschine, eine Tiefziehmaschine, eine Maschinenpresse, eine zyklische Rezeptabarbeitung genannt. Die Energie kann z.B. in Form von elektrischer, hydraulischer oder pneumatischer Energie zur Verfügung gestellt werden. Um den Energieverbrauch von Verbrauchern 2₁, 2₂, 2₃, ..., 2ₙ messen zu können, sind Messsensoren 4₁, 4₂, 4₃, ..., 4ₙ vorgesehen, z.B. Stromsensoren, Spannungssensoren, Leistungssensor, Drucksensoren, Durchflusssensoren, etc., die ihr Messsignal S₁, S₂, S₃, Sₙ an eine Energieauswerteeinheit 6 einer Auswerteeinheit 5 liefern. Es müssen aber nicht von allen Verbrauchern 2₁, 2₂, 2₃, ..., 2ₙ Messsignale S₁, S₂, S₃, ..., Sₙ erfasst werden, sondern es reicht für die Erfindung aus, von zumindest einem Verbraucher 2₁, 2₂, 2₃, ..., 2ₙ zumindest ein Messsignal S₁, S₂, S₃, ..., Sₙ zu erfassen. In der Energieauswerteeinheit 6 kann der Energieverbrauch der einzelnen Verbraucher 2₁, 2₂, 2₃, ..., 2ₙ erfasst, ausgewertet, angezeigt und gegebenenfalls optimiert werden.

Die Messsignale S₁, S₂, S₃, ..., Sₙ der Messsensoren 4₁, 4₂, 4₃, ..., 4ₙ werden gleichzeitig in einer Signalanalyseeinheit 8 mathematisch ausgewertet, um daraus relevante Größen der Verbraucher 2₁, 2₂, 2₃, ..., 2ₙ oder des Produktionsprozesses für eine Betriebs- oder Maschinendatenerfassung 7 abzuleiten.

Der Arbeitszyklus eines Verbrauchers 2₁, 2₂, 2₃, ..., 2ₙ wird z.B. durch eine Autokorrelationsanalyse eines diesen Verbraucher 2₁, 2₂, 2₃, ..., 2ₙ zugeordneten Messsignals S₁, S₂, S₃, ..., Sₙ ermittelt. Alternativ könnte der Arbeitszyklus auch durch Suchen einer wiederkehrenden dominierenden Frequenz im Frequenzspektrum eines zugeordneten Messsignals S₁, S₂, S₃, ..., Sₙ gefunden werden. Das Messignal S₁, S₂, S₃, ..., Sₙ könnte auch mit intelligenten Filtern analysiert oder nach charakteristischen, wiederkehrenden Signalmustern abgesucht werden, um den Arbeitszyklus zu erkennen. Es gibt hier eine Fülle von bekannten mathematischen Methoden, um aus einem Messsignal S₁, S₂, S₃, ..., Sₙ, das zumindest zwei Arbeitszyklen umfasst, einen darin enthaltenen, sich wiederholenden Arbeitszyklus zu extrahieren. Da diese Verfahren allesamt hinreichend bekannt sind, wird hier auf eine genaue Beschreibung dieser Verfahren verzichtet.

Für eine automatische sichere Auswertung der Messsignale S₁, S₂, S₃, ..., Sₙ bietet sich die Autokorrelationsanalyse an. Hierzu wird der zeitliche Verlauf eines Messsignals S₁, S₂, S₃, ..., Sₙ eines Verbrauchers 2₁, 2₂, 2₃, ..., 2ₙ über zumindest zwei Arbeitszyklen gemessen und autokorreliert. Z.B. kann für einen elektrischen Verbraucher, wie einen Elektromotor, als Messsignal der elektrische Strom oder die elektrische Leistung laufend gemessen und in der Signalanalyseeinheit 8 laufend autokorreliert werden.

Aus dem ermittelten Arbeitszyklus kann auf den Takt des zugehörigen Verbrauchers 2₁, 2₂, 2₃, ..., 2ₙ geschlossen werden, woraus wiederum Größen der Betriebsdatenerfassung und Maschinendatenerfassung wie Produktionsstück und/oder Produktionsgeschwindigkeit abgeleitet werden können.

Anhand der nun bekannten Zyklusdauer kann der zeitlich Verlauf des Messsignals S₁, S₂, S₃, ..., Sₙ innerhalb eines Arbeitszyklus beobachtet bzw. mathematisch ausgewertet werden und daraus weitere relevante Größen der Verbraucher 2₁, 2₂, 2₃, ..., 2ₙ oder des Produktionsprozesses für die Betriebs- oder Maschinendatenerfassung 7 abgeleitet werden.

Beispielsweise kann das Messsignal S₁, S₂, S₃, ..., Sₙ über die Zyklusdauer integriert werden, woraus auf eine Pause, Störung oder Abschaltung des Verbrauchers 2₁, 2₂, 2₃, ..., 2ₙ geschlossen werden kann. Ergibt das Integral Null, kann auf einen Stillstand geschlossen werden. Weicht das Integral von einem erwartenden Wert oder Wertebereich ab, kann auf eine Störung geschlossen werden. Durch Vergleich der Integrale über aufeinanderfolgende Zyklusdauern kann auf Veränderungen im Produktionsprozess oder am Verbraucher, wie z.B. Verschleiß, Verschmutzung, Schäden, etc., geschlossen werden. Nicht normale Zustände eines Verbrauchers S₁, S₂, S₃, ..., Sₙ können z.B. auch durch Vergleich eines zugehörigen Messsignals 2₁, 2₂, 2₃, ..., 2ₙ mit einem festgelegten Schwellwert erkannt werden.

Aus der Varianz der Integrale eines Messsignals S₁, S₂, S₃, ..., Sₙ von aufeinanderfolgenden Arbeitszyklen kann z.B. auf die Prozesskonstanz oder damit auch auf die Produktionsgüte geschlossen werden. Je größer die Varianz, umso geringer ist die Prozesskonstanz, was auch die Produktionsgüte reduzieren kann.

Der Signalverlauf eines Messsignals S₁, S₂, S₃, ..., Sₙ ist in vielen Fällen auch repräsentativ für ein bestimmtes Werkstück bzw. eine aktuell produziertes Produkt. Somit kann durch den Vergleich, bzw. die Autokorrelation, der Messsignale S₁, S₂, S₃, ..., Sₙ eines Arbeitszyklus mit abgespeicherten Muster-Signalverläufen auf einen bestimmten Produktionsprozess, z.B. die Produktion eines bestimmtes Produkts oder Rezepts, geschlossen werden. Beispielsweise kann im Spritzguss oder auf Pressen so das gerüstete Werkzeug automatisch erkannt werden.

Auf Basis der erkannten Arbeitszyklen und der synchronisierten Erfassung der Signalverläufe der verschiedenen Verbraucher kann auch der zeitliche Gesamtenergieverbrauch der Produktion optimiert werden, indem z.B. Arbeitszyklen zeitlich relativ zueinander verschoben werden, um Energieverbrauchsspitzen zu glätten. Wenn ein direkter Eingriff in die Produktionsmaschine vermeiden werden soll, dann zumindest das Potential für eine Gesamtenergieverbrauchsoptimierung ermittelt und aufgezeigt werden. Dabei können auch Optimierungen in der Produktion vorgeschlagen werden.

## Patentansprüche

1. Verfahren zur Ermittlung von Größen einer Betriebs- oder Maschinendatenerfassung eines zyklisch arbeitenden Verbrauchers (2₁, 2₂, 2₃, ..., 2ₙ) eines Produktionsprozesses, wobei der Verbraucher (2₁, 2₂, 2₃, ..., 2ₙ) einen Arbeitsprozess durchführt, welcher in einem Arbeitszyklus zyklisch wiederholt wird, wobei zumindest ein den Energieverbrauch charakterisierendes Messsignal (S₁, S₂, S₃, ..., Sₙ) des Verbrauchers (2₁, 2₂, 2₃, ..., 2ₙ) erfasst und daraus der Energieverbrauch des Verbrauchers (2₁, 2₂, 2₃, ..., 2ₙ) bestimmt wird, **dadurch gekennzeichnet, dass** dieses zumindest eine Messsignal (S₁, S₂, S₃, ..., Sₙ) gleichzeitig mathematisch analysiert wird, um den Arbeitszyklus des Verbrauchers (2₁, 2₂, 2₃, ..., 2ₙ) zu ermitteln und auf Basis der ermittelten Zyklusdauer des Arbeitszyklus zumindest eine Größe der Betriebs- oder Maschinendatenerfassung ermittelt wird.

2. Verfahren nach Anspruch 1, **dadurch gekennzeichnet, dass** der Arbeitszyklus durch eine Autokorrelationsanalyse des Messsignals (S₁, S₂, S₃, ..., Sₙ) ermittelt wird.

3. Verfahren nach Anspruch 1, **dadurch gekennzeichnet, dass** der Arbeitszyklus durch Suchen einer wiederkehrenden dominierenden Frequenz im Frequenzspektrum des Messsignals (S₁, S₂, S₃, ..., Sₙ) ermittelt wird.

4. Verfahren nach Anspruch 1, **dadurch gekennzeichnet, dass** der Arbeitszyklus durch Suche eines charakteristischen, wiederkehrenden Signalmusters im Messsignal (S₁, S₂, S₃, ..., Sₙ) ermittelt wird.

5. Verfahren nach einem der Ansprüche 1 bis 4, **dadurch gekennzeichnet, dass** aus dem ermittelten Arbeitszyklus der Takt des Verbrauchers (2₁, 2₂, 2₃, ..., 2ₙ) ermittelt wird, woraus als Größe der Betriebs- und Maschinendatenerfassung die Produktionsstücke und/oder die Produktionsgeschwindigkeit des Verbrauchers (2₁, 2₂, 2₃, ..., 2ₙ) ermittelt werden.

6. Verfahren nach einem der Ansprüche 1 bis 4, **dadurch gekennzeichnet, dass** der Signalverlauf des Messsignals (S₁, S₂, S₃, ..., Sₙ) über den Arbeitszyklus integriert wird, woraus als Größe der Betriebs- und Maschinendatenerfassung eine Pause, Störung oder Abschaltung des Verbrauchers (2₁, 2₂, 2₃, ..., 2ₙ) ermittelt werden.

7. Verfahren nach einem der Ansprüche 1 bis 4, **dadurch gekennzeichnet, dass** der Signalverlauf des Messsignals (S₁, S₂, S₃, ..., Sₙ) über den Arbeitszyklus integriert wird, woraus aus Vergleich der Integrale über aufeinanderfolgende Arbeitszyklen oder mit einem vorgegebenen Schwellwert eine Veränderungen im Produktionsprozess oder des Verbrauchers (2₁, 2₂, 2₃, ..., 2ₙ) ermittelt werden.

8. Verfahren nach einem der Ansprüche 1 bis 4, **dadurch gekennzeichnet, dass** der Signalverlauf des Messsignals (S₁, S₂, S₃, ..., Sₙ) über den Arbeitszyklus integriert wird und aus der Varianz des Integrals des Messsignals (S₁, S₂, S₃, ..., Sₙ) von aufeinanderfolgenden Arbeitszyklen als Größe der Betriebs- und Maschinendatenerfassung die Prozesskonstanz oder die Produktionsgüte ermittelt wird.

9. Verfahren nach einem der Ansprüche 1 bis 4, **dadurch gekennzeichnet, dass** durch Vergleich oder Autokorrelation des Messsignals (S₁, S₂, S₃, ..., Sₙ) eines Arbeitszyklus mit einem abgespeicherten Muster-Signalverlauf ein bestimmter Produktionsprozess ermittelt wird.

10. Verfahren nach Anspruch 1, **dadurch gekennzeichnet, dass** der Energieverbrauch mehrerer Verbraucher (2₁, 2₂, 2₃, ..., 2ₙ) bestimmt und daraus ein Gesamtenergieverbrauch über die Zeit ermittelt wird, und der Gesamtenergieverbrauch optimiert wird, um Energieverbrauchsspitzen zu glätten.

## Claims

1. A method for determining variables of a production data capture process or machine data capture process of a cyclically operating consumer unit (2₁, 2₂, 2₃, ..., 2ₙ) of a production process, wherein the consumer unit (2₁, 2₂, 2₃, ..., 2ₙ) carries out a working process which is repeated cyclically in a working cycle, wherein at least one measurement signal (S₁, S₂, S₃, ..., Sₙ) of the consumer unit (2₁, 2₂, 2₃, ..., 2ₙ) which characterizes the energy consumption is captured and the energy consumption of the consumer unit (2₁, 2₂, 2₃, ..., 2ₙ) is determined therefrom, **characterized in that** the at least one measurement signal (S₁, S₂, S₃, ..., Sₙ) is simultaneously mathematically analyzed in order to determine the working cycle of the consumer unit (2₁, 2₂, 2₃, ..., 2ₙ) and to determine at least one variable of the production data capture process or machine data capture process based on the determined cycle duration of the working cycle.

2. The method according to claim 1, **characterized in that** the working cycle is determined by an autocorrelation analysis of the measurement signal (S₁, S₂, S₃, ..., Sₙ).

3. The method according to claim 1, **characterized in that** the working cycle is determined by searching of a recurring dominant frequency in the frequency spectrum of the measurement signal (S₁, S₂, S₃, ..., Sₙ).

4. The method according to claim 1, **characterized in that** the working cycle is determined by searching for a characteristic recurring signal pattern in the measurement signal (S₁, S₂, S₃, ..., Sₙ).

5. The method according to one of claims 1 to 4, **characterized in that** the clock pulse of the consumer unit (2₁, 2₂, 2₃, ..., 2ₙ) is determined from the determined working cycle, and from this the number of produced parts and/or the production speed of the consumer unit (2₁, 2₂, 2₃, ..., 2ₙ) can be determined as variable of the production data capture process and machine data capture process.

6. The method according to one of claims 1 to 4, **characterized in that** the signal pattern of the measurement signal (S₁, S₂, S₃, ..., Sₙ) is integrated over the working cycle, from which a break, malfunction or switching off of the consumer unit (2₁, 2₂, 2₃, ..., 2ₙ) is determined as variable of the production data capture process and machine data capture process.

7. The method according to one of claims 1 to 4, **characterized in that** the signal pattern of the measurement signal (S₁, S₂, S₃, ..., Sₙ) is integrated over the working cycle, from which changes in the production process or of the consumer unit (2₁, 2₂, 2₃, ..., 2ₙ) can be determined from a comparison of the integrals over successive working cycles or with a predetermined threshold value.

8. The method according to one of claims 1 to 4, **characterized in that** the signal pattern of the measurement signal (S₁, S₂, S₃, ..., Sₙ) is integrated over the working cycle, and the process consistency or the production quality are determined from the variance of the integral of the measurement signal (S₁, S₂, S₃, ..., Sₙ) of successive working cycles as a variable of the production data capture process and machine data capture process.

9. The method according to one of claims 1 to 4, **characterized in that** a specific production process is determined by comparison or autocorrelation of the measurement signal (S₁, S₂, S₃, ..., Sₙ) of a working cycle with a stored sample signal pattern.

10. The method according to claim 1, **characterized in that** the energy consumption of a plurality of consumer units (2₁, 2₂, 2₃, ..., 2ₙ) is determined and from this a total energy consumption over time is determined, and the total energy consumption is optimized in order to smooth energy consumption peaks.

## Revendications

1. Procédé de détermination de grandeurs d'un enregistrement de données de fonctionnement ou de machine d'un consommateur (2₁, 2₂, 2₃, ..., 2ₙ) à fonctionnement cyclique d'un processus de production, dans lequel le consommateur (2₁, 2₂, 2₃, ..., 2ₙ) effectue un processus de travail répété cycliquement dans un cycle de travail, au moins un signal de mesure (S₁, S₂, S₃, ..., Sₙ) du consommateur (2₁, 2₂, 2₃, ..., 2ₙ) caractérisant la consommation d'énergie étant enregistrée et la consommation d'énergie du consommateur (2₁, 2₂, 2₃, ..., 2ₙ) étant ainsi déterminée, **caractérisé en ce que** cet au moins un signal de mesure (S₁, S₂, S₃, ..., Sₙ) est analysé mathématiquement simultanément pour déterminer le cycle de travail du consommateur (2₁, 2₂, 2₃, ..., 2ₙ) et au moins une grandeur de l'enregistrement de données de fonctionnement ou de machine est déterminée sur la base du cycle de travail déterminé.

2. Procédé selon la revendication 1, **caractérisé en ce que** le cycle de travail est déterminé par une analyse d'autocorrélation du signal de mesure (S₁, S₂, S₃, ..., Sₙ).

3. Procédé selon la revendication 1, **caractérisé en ce que** le cycle de travail est déterminé par la recherche une fréquence dominante récurrente dans le spectre de fréquences du signal de mesure (S₁, S₂, S₃, ..., Sₙ).

4. Procédé selon la revendication 1, **caractérisé en ce que** le cycle de travail est déterminé par la recherche d'un motif de signal caractéristique récurrent dans le signal de mesure (S₁, S₂, S₃, ..., Sₙ).

5. Procédé selon l'une des revendications 1 à 4, **caractérisé en ce que** le rythme du consommateur(2₁, 2₂, 2₃, ..., 2ₙ) est déterminé à partir du cycle de travail déterminé, à partir duquel les pièces de production et/ou la vitesse de production du consommateur(2₁, 2₂, 2₃, ..., 2ₙ) sont déterminées comme grandeur de l'enregistrement des données de fonctionnement et de machine.

6. Procédé selon l'une des revendications 1 à 4, **caractérisé en ce que** le trajet de signal du signal de mesure (S₁, S₂, S₃, ..., Sₙ) est intégré pendant le cycle de travail, à partir duquel une pause, un défaut ou un arrêt du consommateur (2₁, 2₂, 2₃, ..., 2ₙ) sont déterminés comme grandeur de l'enregistrement de données de fonctionnement et de machine.

7. Procédé selon l'une des revendications 1 à 4, **caractérisé en ce que** le trajet de signal du signal de mesure (S₁, S₂, S₃, ..., Sₙ) est intégré pendant le cycle de travail, à partir duquel une modification dans le processus de production ou du consommateur(2₁, 2₂, 2₃, ..., 2ₙ) est déterminée par comparaison des intégrales par l'intermédiaire de cycles de travail successifs ou grâce à une valeur-seuil prédéterminée.

8. Procédé selon l'une des revendications 1 à 4, **caractérisé en ce que** le trajet de signal du signal de mesure (S₁, S₂, S₃, ..., Sₙ) est intégré pendant le cycle de travail et la cohérence du processus ou la qualité de production est déterminé(e) à partir de la variance de l'intégrale du signal de mesure (S₁, S₂, S₃, ..., Sₙ) de cycles de travail successifs comme grandeur de l'enregistrement de données de fonctionnement et de machine.

9. Procédé selon l'une des revendications 1 à 4, **caractérisé en ce qu'un** processus de production spécifique est déterminé par comparaison ou autocorrélation du signal de mesure (S₁, S₂, S₃, ..., Sₙ) d'un cycle de travail avec un trajet de signal de motif enregistré.

10. Procédé selon la revendication 1, **caractérisé en ce que** la consommation d'énergie de plusieurs consommateurs (2₁, 2₂, 2₃, ..., 2ₙ) est déterminée et une consommation d'énergie totale est ainsi déterminée dans le temps, et la consommation d'énergie totale est optimisée afin d'aplanir les pics de consommation d'énergie.
